# EUROPÄISCHE PATENTSCHRIFT

(11) **EP 0 687 693 B1**
(45) Veröffentlichungstag und Bekanntmachung des Hinweises auf die Patenterteilung: **01.12.1999**
(21) Anmeldenummer: 95108696.6
(22) Anmeldetag: 07.06.1995
(51) Int. Cl.: C08F 10/00, C08F 4/60

(54) **Amidinato-Katalysatorsysteme zur Polymerisation von Olefinen**
Amidinato catalysts for the olefin polymerisation
Systèmes catalytiques amidinato pour la polymérisation d'oléfines

(30) Priorität: 15.06.1994 DE 4420783; 12.08.1994 DE 4428636
(43) Veröffentlichungstag der Anmeldung: 20.12.1995
(73) Patentinhaber: BASF AKTIENGESELLSCHAFT, 67056 Ludwigshafen (DE)
(72) Erfinder: Schlund, Rüger, Dr., D-67069 Ludwigshafen (DE); Lux, Martin, Dr., D-67125 Dannstadt-Schauernheim (DE); Edelmann, Frank, Prof.Dr., D-39114 Magdeburg (DE); Reissmann, Ulrike, D-37154 Northeim (DE); Rohde, Wolfgang, Dr., D-67346 Speyer (DE)

(56) Entgegenhaltungen:
- WO-A-92/12162
- WO-A-94/14859
- JOURNAL OF ORGANOMETALLIC CHEMISTRY, Bd. 491, 1995 Seiten 153-158, GOMEZ RAFAEL 'Mono-eta-cyclopentadienyl-benzamidinato chloro compounds of TI, Zr, Hf'
- J. CHEM. SOC., CHEM. COMMUN., 1993 Seiten 1415-1417, CHERNEGA ALEXANDROV 'Mono-eta-cyclopentadienyl-benzamidinato compounds of Ti, Zr and Hf'

## Beschreibung

Die vorliegende Erfindung betrifft Katalysatorsysteme, die für die Polymerisation von olefinisch ungesättigten Kohlenwasserstoffen geeigenet sind, enthaltend als aktive Bestandteile
A) einen Metall-Amidinatokomplex der allgemeinen Formel A 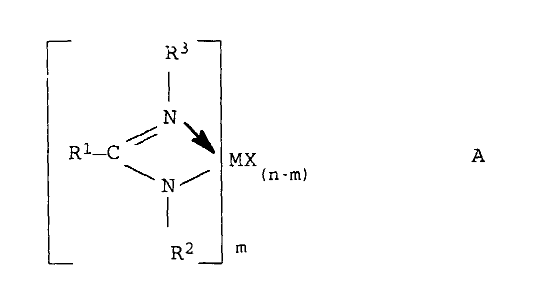 in der die Substituenten und Indices folgende Bedeutung haben:
   - M: ein Metall aus der VI. Nebengruppe des Periodensystems der Elemente
   - X: Ein negatives Abgangsatom oder eine negative Abgangsgruppe, wobei für den Fall (n - m) > 1 die Reste X gleich oder verschieden sein können.
   - R¹, R², R³: C-organische oder Si-organische Reste
   - n: die Wertigkeit von M in dem Metallkomplex A
   - m: ein Wert von 1 bis 5 mit der Maßgabe daß:
   n - m ≥ 0
   ist
   und gegebenenfalls
B) eine Akzeptorverbindung für den Substituenten X der Komponente A als Aktivator.

Weiterhin betrifft die Erfindung die Verwendung der Katalysatorsysteme zur Herstellung von Polymerisaten aus olefinisch ungesättigten Kohlenwasserstoffen.

Die Polymerisation von Olefinen mit Hilfe von sogenannten Ziegler-Natta-Katalysatoren ist seit langem allgemein bekannt. Hierbei handelt es sich im allgemeinen um komplexartige Systeme aus einer aluminiumorganischen Verbindung einerseits und mindestens einer metallorganischen Verbindung eines Übergangsmetalls, insbesondere einer Titanverhindung, andererseits, die sich aus den Komponenten in situ bilden können. Zahlreiche Systeme dieser Art sind bisher beschrieben worden, und einige haben bekannterweise auch in die Großtechnik, vor allem für die Herstellung von Polyethylen, Eingang gefunden.

Keines dieser Systeme ist jedoch frei von irgendwelchen Nachteilen, sei es daß ihre Komponenten nur sehr schwierig herzustellen sind, daß die Systeme oder ihre Komponenten extrem empfindlich gegen Sauerstoff und Wasser sind oder sei es, daß ihre Löslichkeit in organischen Lösungsmitteln nur gering ist, so daß sie sich nur schlecht dosieren lassen.

Teuben et al., J. Am. Chem. Soc. (1993), Band 115, Seiten 4931 - 4932 beschreiben die Dimerisierung von Alkinen mit einem Bis-Benzamidinato-Yttrium-Komplex. Sie erwähnen am Rande die Polymerisation von Ethylen mit diesem Komplex, jedoch in Abwesenheit von aluminiumorganischen Verbindungen.

Weiterhin sind aus der Arbeit von Green et al. in J. Chem. Soc., Chem. Commun. (1993), Seiten 1415 bis 1417 spezielle Benzamidinatokomplexe der Formel 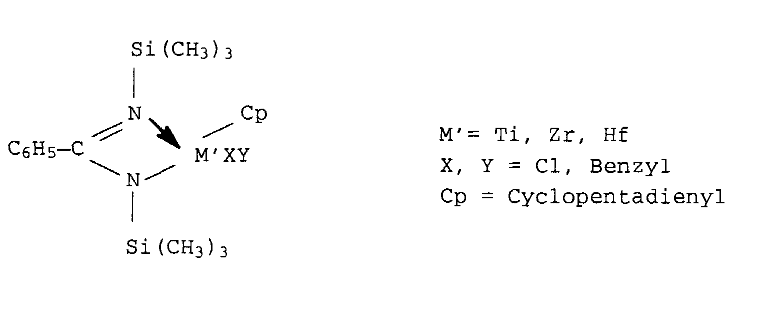 bekannt, die zusammen mit Methylaluminoxan für die Polymerisation von Ethylen eingesetzt wurden. Diese Komplexe sind allerdings wegen der koordinativ gebundenen Cyclopentadienylgruppe nur schwer zugänglich und im übrigen hochempfindlich, so daß sie für technische Zwecke praktisch nicht in Betracht kommen.

EP-A 0 675 138 beschreibt Zirkonium- und Titankomplexe mit Benzamidinatoliganden, sowie deren Verwendung in der Polymerisation von olefinisch ungesättigten Monomeren.

Der vorliegenden Erfindung lag daher die Bereitstellung neuer Katalysatorsysteme für die Polymerisation von olefinisch ungesättigten Kohlenwasserstoffen zugrunde, welche die genannten Nachteile nicht oder nur in geringem Maße aufweisen und die universell anwendbar sind.

Demgemäß wurden die eingangs definierten Katalysatorsysteme gefunden. Außerdem wurde die Verwendung der Katalysatorsysteme zur Herstellung von Polymerisaten aus ungesättigten Kohlenwasserstoffen und Verfahren zur Herstellung von Polymerisaten von ungesättigten Kohlenwasserstoffen mit Hilfe dieser Katalysatorsysteme gefunden.

Das Zentralatom M in A steht für ein Metall der VI. Nebengruppe des Periodensystems, wie Chrom, Molybdän und Wolfram, wobei Chrom besonders bevorzugt ist.

Wie über die Funktionsweise von Ziegler-Natta-Katalysatoren allgemein bekannt ist, wird ein Substituent am Metall der einen Komponente abgelöst und von der anderen Komponente aufgenommen, unter Bildung einer koordinativ ungesättigten Übergangsmetallalkyl- oder Übergangsmetallhydridverbindung. In die so aktivierte Übergangsmetall-C- oder Übergangsmetall-H-Bindung schieben sich dann olefinische Monomere nach dem Mechanismus der Insertionspolymerisation ein. Demgemäß haben im vorliegenden Fall die Substituenten X im allgemeinen die Funktion, leicht vom Zentralmetall M abstrahiert und von der Komponente B) aufgenommen zu werden. Es handelt sich daher bei den Resten X um Atome oder Atomgruppen die als anionische Abgangsgruppe auf die Komponente B) übertragen werden können. Die Reste X können aber auch die Anbindung des Metallkomplexes A an die Oberfläche eines oxidischen Trägermaterials, z.B. durch Substitution von X gegen Oberflächen-OH-Gruppen, ermöglichen. Auf die sonstige Natur dieser Reste kommt es daher nicht oder nur in untergeordnetem Maße an.

Als Reste X seien genannt:

Wasserstoff, Halogen wie Fluor, Brom, Iod und vorzugsweise Chlor, Anionen von anorganischen Säuren wie Nitrat, Sulfat, Perchlorat, Phosphat, Carbonat, Dihydrogensulfat, Hydrogencarbonat. Des weiteren eignen sich Anionen von organischen Säuren wie Acetat, Trifluoracetat, Trichloracetat, Benzoat, Trifluormethylsulfonat, Methylsulfonat, p-Toluylsulfonat. Darüberhinaus seien genannt Alkoholate und Thiolate wie Methanolat, Ethanolat, n- und i-Propanolat, Phenolat, Thiophenolat, Trifluormethylphenolat, Naphtholat, Silanolat. Weiterhin empfehlen sich für X besonders aliphatische C₁- bis C₁₀-Alkyl-Reste, insbesondere Methyl, Ethyl, Propyl, iso-Propyl, Butyl, iso-Butyl, sec.-Butyl, tert.-Butyl, Pentyl, Hexyl sowie Vinyl-, Allyl- und Pentadienylreste. Des weiteren alicyclische C₃- bis C₁₂-Kohlenwasserstoffreste, wie Cyclopropyl, Cyclobutyl, Cyclopentyl und insbesondere Cyclopentadienyl, Cyclohexyl oder C₅- bis C₂₀-Bicycloalkyl, wie Bicyclopentyl, und insbesondere Bicycloheptyl und Bicyclooctyl. Als Substituenten X mit aromatischen Struktureinheiten seien genannt C₆-bis C₁₅-Aryl, bevorzugt Phenyl, oder Naphthyl, aber auch Indenyl, Fluorenyl oder Benzindenyl, Alkylaryl oder Arylalkyl, mit jeweils 1 bis 10 C-Atomen im Alkylrest und 6 bis 20 C-Atomen im Arylrest, wie beispielsweise Tolyl, Benzyl.

Die Reste R¹ bis R³ stehen für C- oder Si-organische Gruppen wie C₁ bis C₁₀-Alkyl, vorzugsweise Methyl, Ethyl, Propyl, iso-Propyl, Butyl, iso-Butyl, sec.-Butyl, tert.-Butyl. Darüberhinaus steht R^{l} bis R³ für 3- bis 12-gliedrige Cycloalkylreste die ihrerseits C₁-bis C₁₀-Alkyl als Substituenten tragen können. Bevorzugte Cycloalkylreste sind Cyclopropyl, Cyclobutyl, Cyclopentyl und insbesondere Cyclohexyl. Des weiteren finden Verwendung C₅- bis C₂₀-bicyclische Reste wie Norbornyl. Die Reste R¹ bis R³ können außerdem stehen für Atomgruppen mit aromatischen Struktureinheiten wie C₆- bis C₂₀-Aryl, vorzugsweise Phenyl, Tolyl, Naphthyl, Biphenyl, des weiteren Alkylaryl oder Arylalkyl, mit jeweils 1 bis 10 C-Atomen im Alkylrest und 6 bis 20 C-Atomen im Arylrest, wie beispielsweise Tolyl, Benzyl. Weiterhin können die Reste R¹ bis R³ auch Si-organische Reste wie Si(R⁴)₃ bedeuten, wobei R⁴ für C₁- bis C₁₀-Alkyl, vorzugsweise Methyl, Ethyl, Propyl, iso-Propyl, Butyl, iso-Butyl, sec.-Butyl, tert.-Butyl, oder C₃-bis C₁₂-Cycloalkyl, vorzugsweise Cyclopropyl, Cyclobutyl, Cyclopentyl und insbesondere Cyclohexyl steht. Weiterhin kann R⁴ noch C₅- bis C₂₀-Bicycloalkyl, vorzugsweise Bicycloheptyl und Bicycclooctyl bedeuten. Darüber hinaus können die Reste R¹ bis R³ für Atomgruppen mit aromatischen Struktureinheiten wie C₆ - bis C₂₀-Aryl, vorzugsweise Phenyl, Naphthyl, des weiteren Alkylaryl oder Arylalkyl, mit jeweils 1 bis 10 C-Atomen im Alkylrest und 6 bis 20 C-Atomen im Arylrest, wie beispielsweise Tolyl, Benzyl stehen.

Trägt das Zentralatom M zwei Amidinato-Liganden, so können diese Liganden ferner auch durch die Reste R¹ bis R³ miteinander verbrückt sein. Als Brückenglieder eignen sich C₁- bis C₆-Alkylenbrücken oder Diorganosilylbrücken wie beispielsweise Dimethylsilyl, Diethylsilyl und Diphenylsilyl, oder gemischte C₁-C₆-Alkylen/Diorgano-Silylbrücken wie beispielsweise -CH₂-Si(CH₃)₂-CH₂- oder -Si(CH₃)₂-CH₂-Si(CH₃)₂-.

Besonders geeignete Verbindungen der allgemeinen Formel A sind solche, bei welchen der Rest R¹ über ein Kohlenstoffatom, welches nur Kohlenstoffatome als benachbarte Substituenten trägt, beispielsweise ein tertiäres aliphatisches oder ein aromatisches C-Atom, an das Amidinat-C-Atom des Komplexes A gebunden ist. Außerdem sind Komplexe besonders geeignet in welchen R² und R³ Trialkylsilylsubstituenten sind.

Die Herstellung der Verbindungen A ist z.B. aus K. Dehnicke, Chemikerzeitung, Band 114, Seiten 295 - 304 (1990), bekannt.

Ein bevorzugtes Verfahren zur Herstellung von A besteht darin, daß man ein Nitril R¹-CN mit einem Siliciumorganischen Alkalimetallamid in einem Ether, vorzugsweise Diethylether oder Tetrahydrofuran, als Lösungsmittel bei (- 80) bis 100 °C umsetzt und das entstande Alkalimetallamidinat mit Übergangsmetallchloriden im Temperaturbereich von (- 80) bis 100 °C reagieren läßt.

Neben den Amidinato-Komplexen A können die erfindungsgemäßen Katalysatorsysteme noch Aktivatoren B) enthalten, die an sich bekannt sind und im Schrifttum auch Cokatalysatoren genannt werden. Im allgemeinen alkylieren sie die Übergangsmetallkomponente A des Katalysatorsystems und/oder abstrahieren einen Liganden X von der Übergangsmetall-Komponente, so daß letztendlich ein Katalysator-system für die Polymerisation von olefinisch ungesättigten Kohlenwasserstoffen entstehen kann. Für diese Aufgabe sind im allgemeinen metallorganische Verbindungen der 1. bis 3. Hauptgruppe oder der 2. Nebengruppe des Periodensystems geeignet, jedoch können auch andere Akzeptorverbindungen wie beispielsweise Carbokationen-Salze eingesetzt werden.

Besonders gut geeignete Aktivatorverbindungen sind Lithium-Organyle, Aluminium-Organyle, Bor-Organyle und Carbokationen-Salze. Bevorzugt sind offenkettige oder cyclische Alumoxanverbindungen die nach US-A 4,794,096 durch Umsetzung von Aluminiumtrialkylen mit Wasser erhalten werden können. Sie sind aus 5 bis 30 Struktureinheiten ⁅O-Al(R⁶)⁆ aufgebaut, die kettenförmig oder ringförmig verbunden sind und wobei die Reste R⁶ C₁- bis C₄-Alkylgruppen bedeuten, bevorzugt Methyl- oder Ethylgruppen. Die Alumoxanverbindungen können auch im Gemisch mit anderen Metallalkylen, bevorzugt mit Aluminiumalkylen, vorliegen.

Des weiteren finden Aluminiumorganyle der allgemeinen Formel Al(R⁵)₃ Verwendung, wobei R⁵ Wasserstoff, C₁- bis C₁₀-Alkyl, vorzugsweise C₁- bis C₄- Alkyl, insbesondere Methyl, Ethyl, Butyl bedeutet. Darüberhinaus kann R⁵ auch für Arylalkyl oder Alkylaryl mit jeweils 1 bis 10 C-Atomen im Alkylrest und 6 bis 20 C-Atomen im Arylrest stehen. Weiterhin sind Aluminiumalkyle Al(R⁵)₃ geeignet in denen R⁵ Fluor, Chlor, Brom oder Iod bedeuten kann, mit der Maßgabe, daß mindestens ein Rest R⁵ ein C-organischer Rest oder ein Wasserstoffatom ist. Besonders bevorzugte Verbindungen sind Trimethylaluminium, Triethylaluminium, Triisobutylaluminium, Di-isobutylaluminiumhydrid, Diethylaluminium-chlorid.

Außerdem sind als Aktivatoren noch Bor-organische Verbindungen gut geeignet, beispielsweise Tris-arylborverbindungen, bevorzugt Tris(pentafluorophenyl)bor, weiterhin Salze von Carboniumionen, bevorzugt Triphenylmethyltetraarylborat, insbesondere Triphenylmethyltetra(Pentafluorophenyl)borat.

Lithiumorganyle eignen sich besonders bei der Verwendung von chromhaltigen Metallkomplexen A. Geeignet sind vor allem Alkyl- und Aryl-Lithium-Verbindungen, insbesondere n-Butyl-Lithium.

Die genannten Al-, Li-, B- oder C-Verbindungen sind bekannt oder in an sich bekannter Weise erhältlich.

Die Aktivatoren können für sich allein oder als Mischungen im Katalysatorsystem eingesetzt werden.

Vorzugsweise setzt man die Aktivatorkomponente B) im molaren Überschuß bezüglich des Metallkomplexes A ein.

Das Molverhältnis von Aktivator B) zu Metallkomplex A beträgt vorzugsweise 0,5 : 1 bis 10000 : 1, besonders 1 : 1 bis 5000 : 1.

Die Bestandteile der erfindungsgemäßen Katalysatorsysteme können in beliebiger Reihenfolge einzeln oder als Gemisch in den Polymerisationsreaktor eingebracht werden. Vorzugsweise wird der Amidinatokomplex mit mindestens einer erfindungsgemäßen Aktivatorkomponente vor dem Eintritt in den Reaktor voraktiviert.

Ein besonderer Vorteil der erfindungsgemäßen Katalysatorsysteme ist ihre sehr gute Löslichkeit in organischen Lösungsmitteln wie beispielsweise aliphatischen oder aromatischen Kohlenwasserstoffen wie Hexan, Heptan, Toluol und den Xylolen und Ethern wie Tetrahydrofuran.

Die erfindungsgemäßen Katalysatoren können aber auch in fester Form eingesetzt werden, indem man sie beispielsweise auf eine Trägersubstanz aufbringt. Dies geschieht vorteilhaft mit dem sogenannten Tränkverfahren. Hierbei wird die Trägersubstanz, beispielsweise Silicagel, Aluminiumoxid oder Polymergrieß in einer Lösung der erfindungsgemäßen Katalysatoren in organischen Lösungsmitteln wie Kohlenwasserstoffe oder Ether suspendiert, wonach man das Lösungsmittel verdampft. Die Trägerung erfolgt vorzugsweise bei Raumtemperatur. Die Katalysator kann auch nachträglich durch Calcinierung im Inertgasstrom bei 100 bis 900°C aktiviert werden.

Mit Hilfe dieser Katalysatorsysteme lassen sich Polymerisate (Homo- und Copolymerisate) aus olefinisch ungesättigten Kohlenwasserstoffen, vorzugsweise Ethylen oder 1-Alkenen, wie Propen, 1-Buten, 1-Penten, 1-Hexen, 4-Methyl-1-penten, Styrol und dessen Derivaten, Cycloolefinen wie beispielsweise Norbornen, Norbornadien, 1,3-Butadien, 1,4- Hexadien und 1,5-Hexadien herstellen.

Die Herstellung dieser Polymerisate kann in den üblichen, für die Polymerisation von Olefinen verwendeten Reaktoren entweder diskontinuierlich oder bevorzugt kontinuierlich durchgeführt werden. Geeignete Reaktoren sind u.a. kontinuierlich betriebene Rührkessel, wobei man gegebenenfalls auch eine Reihe von mehreren hintereinandergeschalteten Rührkesseln verwenden kann. Wegen ihrer leichten Löslichkeit und Dosierbarkeit sind die erfindungsgemäßen Katalysatoren besonders gut für den Einsatz in Hochdruckpolymerisationsverfahren und Lösungspolymerisationsverfahren geeignet.

Die Polymerisationsbedingungen sind an sich unkritisch. Drücke von 1 bis 3500 bar, vorzugsweise 1 bis 3000 bar und insbesondere 5 10 bis 100 bar, Temperaturen von (- 50) bis 400 °C, bevorzugt (-20) bis 250 °C und insbesondere 10 bis 150 °C haben sich als geeignet erwiesen.

Polymerisationsreaktionen mit Hilfe der erfindungsgemäßen Katalysatorsysteme lassen sich in der Gasphase, in Suspension, in flüssigen und in überkritischen Monomeren und in inerten Lösungsmitteln durchführen. Bei der Polymerisation in Lösungsmitteln werden insbesondere flüssige Kohlenwasserstoffe wie Heptan oder Toluol verwendet.

Die mittlere Molmasse der gebildeten Polymerisate kann mit den in der Polymerisationstechnik üblichen Methoden gesteuert werden beispielsweise durch Zufuhr von Reglern wie Wasserstoff oder durch Veränderung der Polymerisationstemperatur. Es können sowohl Polymerisate mit relativ hohen Molmassen hergestellt werden, als auch durch Erhöhung der Polymerisationstemperatur und/oder Zuführung von Wasserstoff solche mit relativ niedrigen Molmassen. Wird die Polymerisation in Abwesenheit von Wasserstoff durchgeführt, so erhält man im allgemeinen Polymerisate mit endständigen Doppelbindungen.

### Beispiele

### Herstellung von Polyethylen

### Vergleichsbeispiele 1 bis 3

In eine Lösung aus 1000 ml Toluol a mg eines Komplexes A und b ml einer 10 Gew.-% Lösung von Methylaluminoxan (MAO) in Toluol wurde bei 50 °C und 1 bar Druck 60 Minuten lang Ethylen eingeleitet. Die hierbei entstandenen Polymere wurden mit methanolischer Salzsäure ausgefällt und wie üblich gereinigt. Die Bestimmung des Staudingerindex geschah nach DIN 53733. Die Molekulargewichte Mw und Mn und deren Verteilung wurden mittels Gelpermeationschromatographie (GPC) in 1,2,4-Trichlorbenzol bei 135°C (Polyethylenstandard) bestimmt.

Folgende Metallkomplexe wurden verwendet: 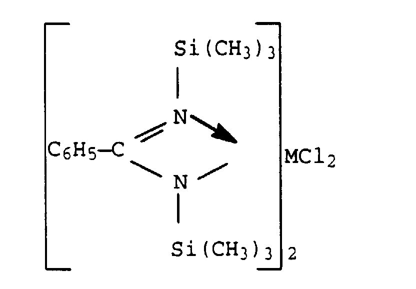 1: M = Zr
2: M = Ti

Die Einzelheiten dieser Versuche sowie deren Ergebnisse sind der nachstehenden Tabelle zu entnehmen.

| Bsp. | Komplex A | mg A | MAO [ml] | Al : M | Ausbeute [g] | Staudinger-Index [dl/g] | Mw/Mn |
|---|---|---|---|---|---|---|---|
| 1 | 1 | 11,5 | 10 | 1000 : 1 | 1,6 | 7,19 | 91 |
| 2 | 1 | 11,5 | 50 | 5000 : 1 | 1,9 | 6,25 | 28 |
| 3 | 2 | 53,9 | 50 | 1000 : 1 | 0,3 | 4,34 | 27 |

### Beispiele 4 und 5

Bis[N,N'- bis(trimethylsilyl)benzamidinato]-chrom (II) wurde, wie in F.T. Edelmann, Z. Naturforsch. 46 b, S. 1328-1332 (1991) beschrieben hergestellt.

2,08 g dieser Verbindung wurden in 25 ml reinem, mit Argon gespültem Heptan bei 20°C gelöst und zu einer Suspension von 12,8 g Kieselgel, welches über 24 Stunden bei 800°C im Argonstrom calciniert worden war, in Heptan gegeben. Dieses Gemisch wurde 2 Stunden bei Raumtemperatur gerührt, dann wurde der Feststoff abfiltriert und bei Raumtemperatur 4 Stunden im Vakuum getrocknet. Das Filtrat war nur schwach gefärbt, was zeigt, daß die Chromverbindung irreversibel auf dem Trägermaterial adsorbiert wurde. Der so hergestellte geträgerte Katalysatorkomplex lag als freifließender brauner Feststoff vor.

Ein 1 l-Autoklav wurde mit 400 ml Isobutan, dem jeweils 30 mg eines Metallalkyls (Komponente B)) zugesetzt wurden, gefüllt. Bei 90°C wurde Ethylen bis zu einem Gesamtdruck von 40 bar aufgepreßt, so daß die Gleichgewichtskonzentration des Ethylens in der Flüssigphase 26 mol-% betrug. Dann wurden in den Autoklaven jeweils 150 mg des geträgerten Katalysatorkomplexes eindosiert. Mit einsetzender Polymerisation wurde Ethylen kontinuierlich zugeführt, so daß die Reaktionsbedingungen (90°C, 40 bar Gesamtdruck) konstant blieben. Nach 90 Minuten wurde die Polymerisation beendet.

Einzelheiten dieser Beispiele sowie deren Ergebnisse sind der nachstehenden Tabelle zu entnehmen.

Der Staudinger-Index [η] wurde nach DIN 53 733 bestimmt.

| Bsp. | Komponente B) | Polyethylen-Ausbeute [g] | [η] [dl/g] |
|---|---|---|---|
| 4 | Triethylaluminium Molverhältnis Al:Cr = 4:1 | 3,0 | 12,3 |
| 5 | n-Butyl-Lithium Molverhältnis Li:Cr = 8:1 | 3,7 | 5,8 |

## Patentansprüche

1. Katalysatorsysteme, die für die Polymerisation von olefinisch ungesättigten Kohlenwasserstoffen geeignet sind, enthaltend als aktive Bestandteile
A) einen Metall-Amidinatokomplex der allgemeinen Formel A 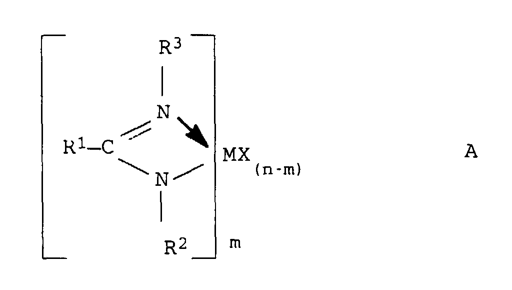 in der die Substituenten und Indices folgende Bedeutung haben:
M ein Metall aus der VI. Nebengruppe des Periodensystems der Elemente
X Ein negatives Abgangsatom oder eine negative Abgangsgruppe, wobei für den Fall (n - m) > 1 die Reste X gleich oder verschieden sein können.
R¹, R², R³ C-organische oder Si-organische Reste
n die Wertigkeit von M in dem Metallkomplex A
m ein Wert von 1 bis 5 mit der Maßgabe daß:
n - m ≥ 0
ist
und gegebenenfalls
B) eine Akzeptorverbindung für den Substituenten X der Komponente A als Aktivator.

2. Katalysatorsysteme nach Anspruch 1, in welchem M für Chrom steht.

3. Katalysatorsysteme nach den Ansprüchen 1 bis 2, in welchen R¹ im Komplex A ein tertiärer oder aromatischer Kohlenwasserstoffrest ist.

4. Katalysatorsysteme nach den Ansprüchen 1 bis 3, in welchen R² und R³ im Komplex A Trialkylsilylreste sind.

5. Katalysatorsysteme nach den Ansprüchen 1 bis 4, in welchen die Komponente B) eine Aluminiumverbindung mit mindestens einer Al-C- oder Al-H-Bindung, eine Organo-Bor-Verbindung oder ein Carbokationensalz, ist.

6. Katalysatorsysteme nach den Anspruchen 1 bis 5, dadurch gekennzeichnet, daß sie auf einen oxidischen Träger aufgebracht sind.

7. Verwendung der Katalysatorsysteme gemäß den Ansprüchen 1 bis 6 zur Herstellung von Homo- oder Copolymerisaten aus Olefinen und/oder arylsubstituierten Olefinen.

8. Verfahren zur Herstellung von Homo- oder Copolymerisaten des Ethylens und olefinisch ungesättigten Kohlenwasserstoffen nach den Methoden der Insertionspolymerisation, unter Verwendung eines Katalysatorsystems vom Typ der Ziegler-Katalysatoren, dadurch gekennzeichnet, daß man als Katalysator-System ein System gemäß den Ansprüchen 1 bis 6 verwendet.

## Claims

1. A catalyst system which is suitable for the polymerization of olefinically unsaturated hydrocarbons and contains, as active components,
A) an amidinato metal complex of the formula A 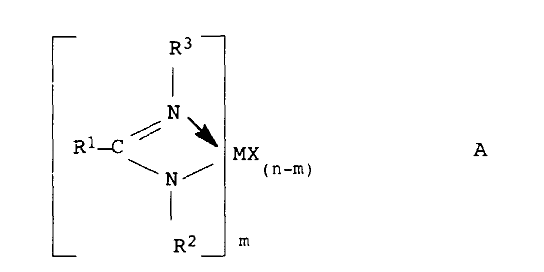 where
M is a metal from subgroup VI of the Periodic Table of Elements,
X is a negative leaving atom or a negative leaving group, and the radicals X may be identical or different if (n - m) > 1,
R¹, R² and R³ are each a C-organic or Si-organic radical,
n is the valency of M in the metal complex A and
m is from 1 to 5, with the proviso that
n - m ≥ 0,
and, if required,
B) an acceptor compound for the substituent X of the component A as an activator.

2. A catalyst system as claimed in claim 1, in which M is chromium.

3. A catalyst system as claimed in claim 1 or 2, in which R¹ in the complex A is a tertiary or aromatic hydrocarbon radical.

4. A catalyst system as claimed in any of claims 1 to 3, in which R² and R³ in the complex A are each trialkylsilyl.

5. A catalyst system as claimed in any of claims 1 to 4, in which the component B) is an aluminum compound having at least one Al-C or Al-H bond, an organoboron compound or a carbocation salt.

6. A catalyst system as claimed in any of claims 1 to 5, which is applied to an oxide carrier.

7. The use of a catalyst system as claimed in any of claims 1 to 6 for the preparation of homo- or copolymers of olefins and/ or aryl-substituted olefins.

8. A process for the preparation of homo- or copolymers of ethylene and olefinically unsaturated hydrocarbons by the insertion polymerization method using a catalyst system of the Ziegler catalyst type, wherein the catalyst system used is a system as claimed in any of claims 1 to 6.

## Revendications

1. Systèmes catalytiques, qui sont appropriés pour la polymérisation d'hydrocarbures oléfiniquement insaturés, comportant comme composants actifs
A) un complexe de métal-amidinato de la formule générale A : 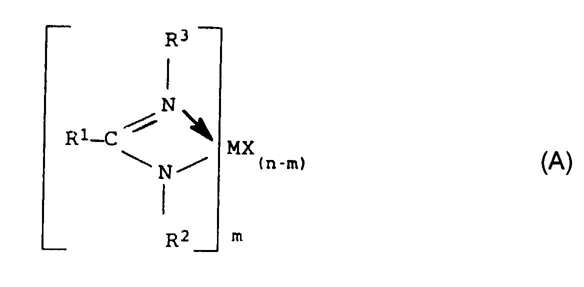 dans laquelle les substituants et indices ont les significations suivantes :
M est un métal du groupe secondaire VI du système périodique des éléments,
X est un atome sortant négatif ou un groupe sortant négatif, où, dans le cas où (n - m) > 1, les radicaux X peuvent être identiques ou différents,
R¹, R², R³ représentent des radicaux C-organiques ou Si-organiques,
n a la valence de M dans le complexe métallique A,
m a une valeur de 1 à 5 à la condition que
n - m ≥ 0
et éventuellement
B) un composé accepteur pour les substituants X du composant A, comme activeur.

2. Systèmes catalytiques suivant la revendication 1, dans lesquels M représente du chrome.

3. Systèmes catalytiques suivant l'une des revendications 1 et 2, dans lesquels R¹ dans le complexe A est un radical d'hydrocarbure tertiaire ou aromatique.

4. Systèmes catalytiques suivant l'une des revendications 1 à 3, dans lesquels R² et R³ dans le complexe A sont des radicaux de trialkylsilyle.

5. Systèmes catalytiques suivant l'une des revendications 1 à 4, dans lesquels le composant B) est un composé d'aluminium présentant au moins une liaison Al-C ou Al-H, un composé d'organo-bore ou un sel de carbocations.

6. Systèmes catalytiques suivant l'une des revendications 1 à 5, caractérisés en ce qu'ils sont appliqués sur un support à oxydation.

7. Utilisation des systèmes catalytiques suivant l'une des revendications 1 à 6, pour la préparation d'homopolymères ou de copolymères d'oléfines et/ou d'oléfines arylsubstituées.

8. Procédé de préparation d'homopolymères ou de copolymères de l'éthylène et d'hydrocarbures oléfiniquement insaturés suivant les méthodes de la polymérisation d'insertion, par utilisation d'un système catalytique du type des catalyseurs de Ziegler, caractérisé en ce qu'on utilise, comme système catalytique, un système suivant l'une des revendications 1 à 6.
